# EUROPÄISCHE PATENTANMELDUNG

(11) **EP 4 749 190 A1**
(43) Veröffentlichungstag der Anmeldung: **27.05.2026**
(21) Anmeldenummer: 25216333.2
(22) Anmeldetag: 17.11.2025
(51) Int. Cl.: F24C 7/08

(54) **LEBENSMITTEL-REPRÄSENTANT, VERFAHREN UND GARGERÄT ZUM EFFIZIENTEN GARRAUM-ENTLADEN BEI MISCHBESCHICKUNG**

(30) Priorität: 22.11.2024 DE 102024134484
(71) Anmelder: RATIONAL Aktiengesellschaft, 86899 Landsberg am Lech (DE)
(72) Erfinder: Heß, Fabian, 86899 Landsberg am Lech (DE); Hartmann, Florian, 86899 Landsberg am Lech (DE); Storhas, Rainer, 86899 Landsberg am Lech (DE)
(74) Vertreter: Weber-Bruls, Dorothée

(57) **Zusammenfassung**

Die vorliegende Erfindung betrifft einen Repräsentant eines in einem Garraum eines Gargerät mit einem Garprogramm zu garenden Lebensmittels, in Form eines virtuellen Bons (10, 10a, 10b, 10c, 30', 30", 330-339, 330'-339'), das konfiguriert ist, um in einem Anzeigebereich (1, 100, 100', 100") einer Anzeigeeinrichtung, insbesondere des Gargeräts, relativ zu einer Zeitachse zum Visualisieren einer Gardauer anzeigbar zu sein, wobei sich das Bon (10, 10a, 10b, 10c, 30', 30", 330-339, 330'-339') von einem Startzeitpunkt, zu dem das repräsentierte Lebensmittel in den Garraum zu beladen ist, bis zu einem Endzeitpunkt, zu dem das repräsentierte Lebensmittel aus dem Garraum zum Erreichen einer eingestellten Gare zu entladen ist, in seiner Länge erstreckt, so dass sich aus der Differenz von Endzeitpunkt zu Startzeitpunkt die Gardauer ergibt, wobei zu dem Endzeitpunkt ein Toleranzband in Abhängigkeit von zumindest einem Überlappungsfaktor bestimmt ist, wobei der Überlappungsfaktor ein prozentualer Betrag der Gardauer ist, der einen Gardauerverkürzungsbereich (11, 31', 31'', 340'-349'), der von der Gardauer abziehbar ist, und/oder einem Gardauerverlängerungsbereich (12, 32', 32", 350'-359'), der auf die Gardauer aufschlagbar ist, definiert, und das Toleranzband den Gardauerverkürzungsbereich und/oder den Gardauerverlängerungsbereich umfasst. Ferner betrifft die vorliegende Erfindung ein Verfahren zum Anzeigen eines Entladens von Lebensmitteln aus einem mit einer Tür verschließbaren Garraum eines Gargeräts unter Verwendung solcher Repräsentanten und ein Gargerät zum Durchführen solch eines Verfahrens.

## Beschreibung

Die vorliegende Erfindung betrifft einen Repräsentant eines in einem Garraum eines Gargeräts mit einem Garprogramm zu garenden Lebensmittels, in Form eines virtuellen Bons, das konfiguriert ist, um in einem Anzeigebereich einer Anzeigeeinrichtung, insbesondere des Gargeräts, relativ zu einer Zeitachse zum Visualisieren einer Gardauer anzeigbar zu sein, wobei sich das Bon von einem Startzeitpunkt, zu dem das repräsentierte Lebensmittel in den Garraum zu beladen ist, bis zu einem Endzeitpunkt, zu dem das repräsentierte Lebensmittel aus dem Garraum zum Erreichen einer eingestellten Gare zu entladen ist, in seiner Länge erstreckt, so dass sich aus der Differenz von Endzeitpunkt zu Startzeitpunkt die Gardauer ergibt. Es betrifft ferner ein Verfahren zum Anzeigen eines Entladens von Lebensmitteln aus einem mit einer Tür verschließbaren Garraum eines Gargeräts unter Verwendung solcher Repräsentanten und ein Gargerät zum Durchführen solch eines Verfahrens.

Es sind verschiedene Verfahren zum Bertreiben von Gargeräten bekannt. Im Stand der Technik werden dabei häufig Repräsentanten für Garprogramme zum Anzeigen eines Funktionsplans oder auch eines aktuellen Betriebs genutzt. Solche Garprogramme-Repräsentanten werden auch virtuelle Bons oder einfach nur Bons genannt.

So offenbart beispielsweise die WO 2012/117100 A2 ein Verfahren zum Betreiben zumindest eines Gargeräts mit einem Garraum, einer Eingabeeinrichtung, einer Anzeigeeinrichtung und einer Speichereinrichtung, bei dem aus der Speichereinrichtung eine Vielzahl von Arbeitsprogrammen für das Gargerät abgerufen werden kann, einschließlich einer für die zum Durchführen jedes Arbeitsprogramms charakteristischen Zeit, die zusätzlich zur Dauer des Ablaufs des Arbeitsprogramms auch durch eine Vorbereitungszeit zur Vorbereitung des Ablaufs des Arbeitsprogramms und/oder eine Nachbereitungszeit zur Nachbereitung des Durchführens des Arbeitsprogramms bestimmt wird. Wesentlich ist dabei, dass auf der Anzeigeeinrichtung ein Repräsentant eines jeden gespeicherten Arbeitsprogramms angezeigt werden kann, wobei über jeden angezeigten Repräsentanten auch die jeweils dazugehörende Zeit angezeigt wird.

Ferner beschreibt die DE 10 2014 106 676 A1 ein Verfahren zur Erstellung eines Ablaufplans für den Betrieb eines Gargeräts mit einer Energiespeichereinrichtung zum Speichern von Wärmeenergie und zum Abgeben von Wärmeenergie, einer Gargutbehandlungseinrichtung zum Behandeln von Gargut in einem Garprozess, einer Garprozessspeichereinrichtung zum Speichern einer Vielzahl von Garprozessen, einer Eingabeeinrichtung zum Auswählen von Garprozessen und einer Steuer- oder Regeleinrichtung zum Führen ausgewählter Garprozessen. Das Verfahren umfasst die folgenden Schritte: Auswählen von zumindest zwei Garprozessen aus der Vielzahl an Garprozessen, wobei jeder Garprozess mit zumindest einem ersten Parameter einer Gargutbehandlung und zumindest einem zweiten Parameter eines Energieverbrauchs aus der Garprozessspeichereinrichtung aufgerufen wird, Ermitteln des Ladungszustands der Energiespeichereinrichtung und Bestimmen der zeitlichen Abfolge der ausgewählten Garprozesse in Abhängigkeit von zumindest den zweiten Parametern der ausgewählten Garprozesse und dem Ladungszustands der Energiespeichereinrichtung.

Aus der DE 10 2010 036 639 A1 ist ein gattungsgemäßer Repräsentant zumindest eines Abschnitts eines in einem Gargerät durchführbaren Programms bekannt, der im Anzeigebereich einer Anzeigeeinrichtung relativ zu einer für den Betrieb zumindest eines Gargeräts charakteristischen Zeitachse zum Visualisieren des Abschnitts anordbar ist, wobei zumindest eine Erstreckung des Repräsentanten parallel zur Zeitachse charakteristisch für eine Dauer des Abschnitts ist. Gemäß der DE 10 2010 036 639 A1 passt sich die Erstreckung parallel zur Zeitachse an jede Änderung des Zeitbedarfs des Abschnitts während des Ablaufs desselben automatisch an, die sich aus einer zu zumindest zwei, vorzugsweise einer Vielzahl von, Zeitpunkten während des Ablaufs des Abschnitts durchgeführten Bestimmung des Zeitbedarfs ergibt, und zwar zur Visualisierung der Ungenauigkeit der Bestimmung des Zeitbedarfs.

Die DE 10 2019 121 443 B3) beschäftigt sich mit einem Verfahren zur Visualisierung einer Programmplanung unter Nutzung von Programm-Repräsentanten.

Aus der EP 2 860 460 A1 ist ein Verfahren zum Betreiben eines Gargeräts bekannt, welches ein Anzeige- und Bedienfeld in Form eines Touch-Screens aufweist, auf dem Anzeige- und Schaltflächen anzeigbar sind, so dass durch Berührung angezeigter Schaltflächen Eingaben in die Gerätesteuerung erzeugbar sind.

In der DE 10 2009 006 182 A1 ist ein Verfahren zum Anordnen von Repräsentanten von über zumindest eine Eingabeeinrichtung aus einer Vielzahl von Programmen für Gargeräte ausgewählten Programmen auf zumindest einer Anzeigeeinrichtung, die mit der Eingabeeinrichtung und einer Steuer- oder Regeleinrichtung in Wirkverbindung steht, beschrieben.

Es besteht nach wie vor das Bedürfnis, eine intelligente Lösung für ein effizientes Entladen von Lebensmittelen an deren Garende bei einer Mischbeschickung, also einer Beladung eines Garraums mit unterschiedlichen Lebensmitteln zu unterschiedlichen Zeitpunkten, wie im Àla-Carte-Betrieb eines Restaurants üblich, bereitszustellen. Bei solch einer Mischbeschickung, die einen sogenannten Mixbetrieb eines Gargeräts fordert, werden in der Regel zu bestimmten Zeitpunkten bzw. über bestimmte Zeitdauern mehrere Gargutträger mit Lebensmitteln gleichzeitig behandelt. Aufgrund unterschiedlicher Gardauern der jeweiligen Lebensmittel, die sich insbesondere aus Nutzereinstellung und/oder Lastaufschlägen ergeben, wird ein Gargeräte-Nutzer für jeden Gargutträger-Einschubs separat zum Entladen des Garraums am entsprechenden Garende aufgefordert. So kann es dazu kommen, dass Bons zum Entladen bestimmter Gargutträger-Einschübe auffordern, auch wenn Sekunden zuvor der Nutzer bereits zum Entladen eines anderen Gargutträger-Einschubs über den diesem zugeordenten Bon aufgefordert wurde. Für den Nutzer entstehen so vermeidbare Interaktionen mit dem Gerät. Des Weiteren werden weitere Heizimpulse erzeugt, die nicht zwingend notwendig, und mithin nicht energieeffizient sind.

Fordert zum Beispiel ein Bon 1 zum Entladen auf und ein Garprogramm eines weiteren Bons 2 hat zu diesem Zeitpunkt noch 5 Sekunden Restlaufzeit, so öffnet ein Nutzer die Tür des Geräts, entnimmt das Lebensmittel, das dem Bon 1 zugeordnet ist, schließt die Tür sodann, um 5 Sekunden später eine Aufforderung über das Bon 2 zum erneuten Türöffnen zwecks Entladen zu erhalten.

Aufgabe der vorliegenden Erfindung ist es daher, den gattungsgemäßen Repräsentanten derart weiterzuentwickeln, dass die Nachteile des Stands der Technik überwunden werden.

Diese Aufgabe wird dadurch gelöst, dass zu dem Endzeitpunkt ein Toleranzband in Abhängigkeit von zumindest einem Überlappungsfaktor bestimmt ist, wobei der Überlappungsfaktor ein prozentualer Betrag der Gardauer ist, der einen Gardauerverkürzungsbereich, der von der Gardauer abziehbar ist, und/oder einen Gardauerverlängerungsbereich, der auf die Gardauer aufschlagbar ist, definiert, und das Toleranzband den Gardauerverkürzungsbereich und/oder den Gardauerverlängerungsbereich umfasst.

Dabei kann vorgesehen sein, dass der Überlappungsfaktor von zumindest einer ersten Größe zum Klima im Garraum, wie bestimmt durch die Temperatur, die Feuchte, die Strömungsgeschwindigkeit und/oder den Druck im Garraum, zumindest einer zweiten Größe zur Art des Lebensmittels, wie Geflügel, Fleisch, Fisch, Eierspeisen und Desserts, Gemüse und Beilagen oder Backwaren, zumindest einer dritten Größe zum Garbetrieb, wie mit Heißluft, Dampf und/oder Mikrowellen, zumindest einer vierten Größe zur Empfindlichkeit, zum Kaliber, zur Menge und/oder zum Zustand, insbesondere vorgegart, gefroren oder frisch, des Lebensmittels, zumindest einer fünften Größe zum Gargrad, wie bestimmt durch Kerntemperatur, Bräunung und/oder eine Krustierung, zumindest einer sechsten Größe zum Gargerät, wie bestimmt durch eine Garraumdimensionierung, ein Zubehör, insbesondere in Form eines Gargutträgers, eine Klimazone im Bereich des Lebensmittels im Garraum und/oder einen Ressourcenverbrauch, insbesondere bestimmt durch einen Energieverbrauch, und/oder zumindest einer siebten Größe zum Garverfahren, wie in Form eines À-la-Carte-Garens, eines Regenerierens oder Finishings, abhängt.

Ferner wird vorgeschlagen, dass für die erste, zweite, dritte, vierte, fünfte, sechste und/oder siebte Größe ein Defaultwert des Überlappungsfaktors vorgegeben ist, wobei der Defaultwert veränderbar ist.

Des Weiteren kann vorgesehen sein, dass der Überlappungsfaktor bis zu 8% der Gardauer beträgt, wobei insbesondere ein Mittelwert von 5% vorgebbar und/oder veränderbar ist.

Ebenfalls vorgeschlagen ist, dass innerhalb des Toleranzbands keine wahrnehmbaren sensorische und hygienische Garergebnisbeeinträchtigungen des aus dem Garraum entladenen Lebensmittels wahrnehmbar sind.

Die vorliegende Erfindung betrifft auch ein Verfahren zum Anzeigen eines Entladens eines mit einer Tür verschließbaren Garraums eines Gargeräts, wobei im Garraum zumindest zwei Lebensmittel zumindest zeitweise gleichzeitig gegart werden und jedem Lebensmittel ein erfindungsgemäßer Repräsentant in Form eines virtuellen Bons zugeordnet wird, das auf einem Anzeigebereich einer Anzeigeeinrichtung entlang einer Zeitachse in x-Richtung angezeigt wird.

Dabei kann vorgesehen sein, dass im Garraum n Einschubebenen und/oder m Garzonen bereitgestellt sind, und im Anzeigebereich die n Einschubebenen längs der y-Richtung und/oder die m Garzonen längs der z-Richtung angezeigt werden, wobei n und/oder m zu den natürlichen Zahlen von 2 und mehr gehören.

Bevorzugt ist erfindungsgemäß, dass für jedes Bon eine Entladungsinformation und/oder eine Entladungsaufforderung zu einem Entladezeitpunkt angezeigt und/oder ausgegeben wird, und/oder für jeden Bon der Gardauerverkürzungsbereich und(oder der Gardauerverlängerungsbereich angezeigt wird, zumindest auf Anfrage.

Ferner wird vorgeschlagen, dass bei Überlagerung der Toleranzbänder von zumindest zwei Bons entlang der x-Achse ein gemeinsamer Entladezeitpunkt bestimmt wird, insbesondere durch einfache Mittelwertbildung, in Abhängigkeit der ersten, zweiten, dritten, vierten, fünften, sechsten und/oder siebten Größe gewichtete Mittelwertbildung, Auswahl des frühestmöglichen Entladungszeitpunkts für besagte zumindest zwei Bons oder Auswahl des spätestmöglichen Entladungszeitpunkts für besagte zumindest zwei Bons.

Gemäß der Erfindung kann auch vorgesehen sein, dass eine Energieeinsparung zur Bestimmung des Überlappungsfaktors eingestellt werden kann, insbesondere über einen Einstellregler.

Weiterhin kann vorgesehen sein, dass eine Empfindlichkeit zur Bestimmung des Überlappungsfaktors eingestellt werden kann, insbesondere durch Auswahl einer von mehreren Empfindlichkeitsstufen.

Schließlich schlägt die Erfindung auch ein Gargerät mit einem durch eine Tür verschließbaren Garraum, der n Einschubebenen und/oder m Garzonen umfasst, wobei n und/oder m zu den natürlichen Zahlen von 2 und mehr gehören, und mit einer Anzeigeeinrichtung, die einen Anzeigebereich umfasst, in dem auf einem virtuellen Bonbrett mit einer Zeitachse in x-Richtung und einer Einschubebenenachse in y-Richtung und/oder einer Garzonenachse in z-Richtung erfindungsgemäßen Repräsentanten von im Garraum mit einem Garprogramm zu garenden Lebensmittels in Form von virtuellen Bons ablegbar sind.

Dabei kann vorgesehen, dass Endzeitpunkte zu den Lebensmitteln in einem erfindungsgemäßen Verfahren bestimmbar sind.

Der Erfindung liegt somit die überraschende Erkenntnis zugrunde, dass eine Gerätesteuerung ein Zeitfenster von bspw. 5% Restgardauer einer Gesamtgardauer eines Garprogramms (Bon 2) für ein zu garendes Lebensmittel 2 bestimmt und als Zeitraum, und zwar als einen Garzeitverkürzungsbereich, definiert, innerhalb dessen besagtes Lebensmittel 2 mit einem anderen Lebensmittel 1, dessen Bon 1 bereits eine Entladungsaufforderung gestartet hat, gleichzeitig entladen werden kann. Es ist auch möglich, dass die Gesamtgardauer des Garprogramms zum Bon 1 um einen bestimmten Zeitraum, und zwar um einen Garzeitverlängerungsbereich, verlängert wird, so dass Lebensmittel 1 zusammen mit Lebensmittel 2 nach Ablauf dessen Gesamtgardauer entladen werden kann. Es geht erfindungsgemäß also darum, ein Entladen auf einen Zeitpunkt zu verlagern, zu dem mehrere Lebensmittel gleichzeitig entladen werden können. Der für jedes Lebensmittel bestimmte Zeitraum kann dabei mit dessen Empfindlichkeiten gekoppelt werden. Z.B. kann ein empfindliches Lebensmittel ein geringeres Toleranzband aufweisen als ein unempfindliches, bspw. bestimmt durch 1% Restgardauer seiner Gesamtgardauer.

Möglich ist auch, einen Mittelwert für die prozentuale Restgardauer vorzugeben, wie z.B. 3%, und diesen Mittelwert einstellbar zu gestalten. Bspw. kann über einen Schieberegler zur Energieeinsparung oder vordefinierte Empfindlichkeitsstufen der Toleranzbereich zur Mittelwertbildung angepasst werden.

Dabei können Bons zu sensiblen Lebensmitteln auch nur ein Verschieben des Toleranzbandes in eine Richtung erlauben, wenn z.B. entweder ein Durchgaren aus Hygienevorgaben garantiert sein muss oder ein Übergaren aus geschmacklichen oder ästhetischen Gründen vermieden werden soll. Diese Informationen können in einem Bon hinterlegt sein, so dass eine Berücksichtigung bei einer Mittelwertbildung vereinfacht wird.

Auch kann vorgesehen sein, dass der Gargräte-Nutzer oder Restaurant-Inhaber am Gargerät auswählen kann, ob er energiesparender Garen möchte, was die prozentuale Restgardauer des Zeitraums erhöht, so dass weniger Türöffnungen anfallen.

Somit verhindert das erfindungsgemäße Verfahren unnötige Geräteinteraktionen und Heizungsanforderungen. Der Nutzer eines Gargeräts wird dann nämlich im Küchenalltag nicht mehr mit unnötig vielen Tür-Öffnungs-/Schließungsaufforderungen und dazugehörigen Klingeltönen belastet. Auch wird die Nachhaltigkeit durch Energieeinsparung, und zwar durch Vermeidung von kurzen Heizzyklen, die keine bzw. kaum Relevanz für die Lebensmittelgare haben, gesteigert. Gleichzeitig wird ein Übergaren von Lebensmitteln vermieden, indem Lebensmittel, deren Garprogramme durch Bons repräsentiert werden, die noch nicht abgelaufen sind, in den letzten Sekunden ihrer Garung durch das Entladen anderer Lebensmittele, auch bei geöffneter Tür, mit Energie beaufschlagt werden, die zu einer Übergarung führen kann.

Also wird erfindungsgemäß eine Arbeitserleichterung, eine Energie-/Ressourceneinsparung und eine Qualitätssteigerung beim Garen in Mischbeschickung ermöglicht.

Weitere Merkmale und Vorteile der Erfindung ergeben sich aus der nachfolgenden Beschreibung, in der Ausführungsbeispiele der Erfindung anhand schematischer Zeichnungen im Einzelnen erläutert sind. Dabei zeigt:
- Figur 1: die Größe eines Überlappungsfaktor zur Gardauerverkürzung und/oder Gardauerverlängerung als Funktion der Temperatur im Garraum, die auf der x-Achse aufgetragen ist, und der Feuchte im Garraum, die auf der y-Achse aufgetragen ist;
- Figuren 2a - 2c: jeweils einen Bon mit einem über einen Überlappungsfaktor hinterlegten Toleranzband, und zwar ohne visualisiertem Toleranzband, mit visualisiertem Toleranzband zur Gardauerverkürzung bzw. mit visualisiertem Toleranzband zur Gardauerverkürzung als auch Gardauerverlängerung;
- Figuren 3a - 3c: jeweils einen Einstellregler zum Einstellen einer Energieeinsparung, und zwar in seiner Ausgangstellung, in einer Stellung mit hoher Energieeinsparung samt dazugehörendem Bon bzw. in einer Stellung mit geringer Energieeinsparung samt dazugehörendem Bon; und
- Figuren 4a - 4c: jeweils einen Einstellregler zum Einstellen einer Energieeinsparung und zehn Bons für zehn Einschubebenen eines Gargeräts längs einer Zeitachse, und zwar bei einer Einstellung mit keiner Energieeinsparung bzw. bei einer Einstellung mit großer Energieeinsparung, mit Toleranzbändern bzw. mit Toleranzbändern und frühesten sowie spätesten Entladezeitpunkten.

Im Rahmen der vorliegenden Erfindung wird der Begriff "Überlappungsfaktor" als ein prozentualer Betrag einer Gardauer eines zu garenden Lebensmittels definiert, wie bspw. 5% Restgardauer einer Gesamtgardauer eines Garprogramms zu einem Lebensmittel. Dieser Überlappungsfaktor definiert den Zeitraum, der von einer vorgegebenen, optimalen Gardauer des Lebensmittels abgezogen und/oder auf die vorgegebene, optimale Gardauer des Lebensmittels aufgeschlagen werden kann, ohne dass merkliche Defizite in sensorischen und hygienischen Garergebnissen wahrgenommen werden können. Also bestimmt der Überlappungsfaktor einen Zeitraum nach Art eines Toleranzbandes, innerhalb dessen eine Verkürzung und/oder einer Verlängerung der Gardauer stattfinden kann.

Bei einem Überlappungsfaktor von 5 % ist sichergestellt, dass 95 % der für ein Garprogramm geplanten Energie direkt auf das Lebensmittel einwirkt. Mit diesem Wert wird im Schnitt eine ausreichende Balance zwischen innerer und äußerer Gare erzielt, so dass das Lebensmittel im gewünschten Umfang gegart wird, ohne Über- oder Untergarung.

Je nach insbesondere Klimabedingungen im Garraum, Art des Lebensmittels sowie Garverfahren, kann es aber sinnvoll sein, den Überlappungsfaktor an die spezifischen Anforderungen anzupassen.

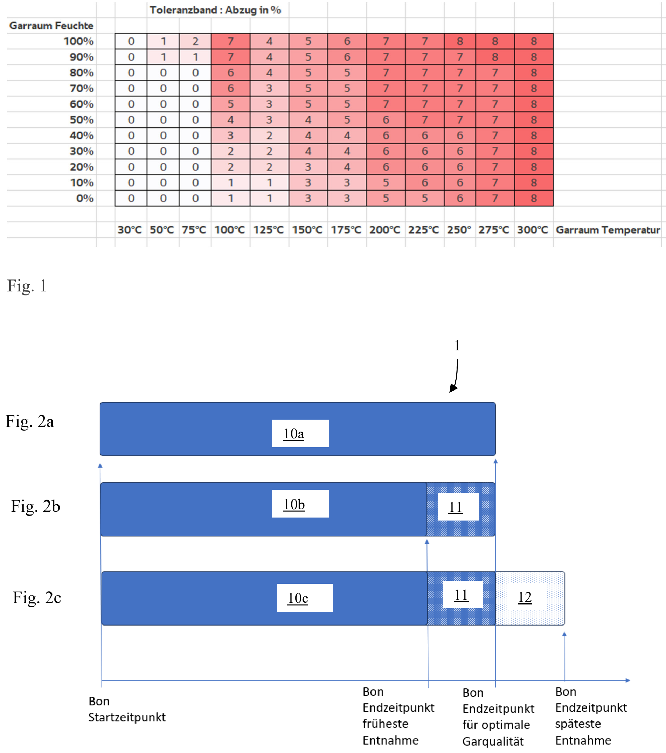

So kann das Klima im Garraum zu einer Varianz von 0 bis 8 % beim Überlappungsfaktor führen, wie sich aus Figur 1 ergibt. Dies wird im Anschluss anhand von Beispielen erläutert:
- Bis zu 8% Überlappungsfaktor
   ∘ Bei Temperaturen von oberhalb von 200°C (trockenes Klima) in einem Garraum wirkt im Zusammenspiel mit hohen Lüfterdrehzahlen bei Garverfahren wie Grillen, Kurzbraten oder Überkrusten ein hoher Energietransport von der Oberfläche eines Lebensmittels in dessen Kern. Auch beim Öffnen der Tür des Garraums und somit Unterbrechen der Garung wird dieser Energietransport eine gewisse Zeit anhalten.
      ▪ Bei einem Rumpsteak (ca. 250 g) und einer Gardauer von 9 Minuten (540 s) würde im Toleranzband von 8 % der Garvorgang bereits nach 497 s beendet werden können, ohne merkliche sensorische Defizite im Lebensmittel.
      ▪ Ähnlich verhält es sich beim Dämpfen von Lebensmitteln bei Siedetemperatur. Kondensierender Dampf überträgt enorme Energiemengen und somit kann auch hier ein Torenzband von bis zu 8 % angesetzt werden.
- Bis zu 1 % Überlappungsfaktor
   Bei Temperaturen deutlich unter 100° C und geringer Feuchte, wie z.B. 60° C und 20 % Feuchte, findet ein verhältnismäßig geringer Energietransport statt, welcher auch direkt nach Beenden des Garvorgangs versiegt. Anwendungsfelder sind z.B. das trockene Gären ("Anhauten-Lassen" von Macarons) oder das sanfte Trocknen von Teigwaren.

Aber auch die Lebensmittel an sich können zu einer Varianz von 0 bis 8 % beim Überlappungsfaktor führen. Dies wird im Anschluss wieder anhand von Beispielen erläutert:
• Zwischen 1-7 % Überlappungsfaktor
   ∘ Tierische Proteine: Lebensmittel, die hauptsächlich aus Eiweiß bestehen, wie Fleisch, Fisch und Geflügel, erfordern ein verhältnismäßig kleinen Überlappungsfaktor im Bereich von 2-4 %. Der Grund dafür ist, dass diese Lebensmittel eine gewisse innere Gare benötigen, um zum einem einen gewünschten Garegrad zu erreichen und zum anderen die mit dem Garendzeitpunkt eingehender mikrobiellen Sicherheit zu gewährleisten.
   ∘ Hülsenfrüchte/ Getreide (Süßgräser): Lebensmittel wie Linsen, Bohnen oder Reis benötigen aufgrund ihrer geringen Stückgröße einen Überlappungsfaktor < 5 %, da der Energieeintrag nach Garende schnell versiegt und die Festigkeit dieser Lebensmittel maßgeblich die empfundene Garqualität definiert.
   ∘ StärkeLebensmittel wie Kartoffel: Diese Lebensmittel werden mit einem Überlappungsfaktor größer > 5 % angesetzt. Grund ist das relativ große Volumen und der damit eingehende große Energiespeicher nach Beendigung des Garens. Ebenfalls sind diese Lebensmittel aufgrund der langen Gardauer für eine À-la-Carte-Situation häufig vorgegart und somit liegt hier eher der Wiedererwärmungsvorgang im Fokus.
   ∘ Ei-Lebensmittel: Lebensmittel, die Ei enthalten, wie etwa Quiches, Rühreier aber auch reine Schaleneier erfordern einen engen Überlappungsfaktor von 1-3 %, da es gewünscht ist, die Proteine des Eies optimal zur Denaturierung und somit zum Stocken zu bringen. Dies passiert zwar vorrangig durch die genaue Steuerung des Garraumklimas, aber auch der Zeitaspekt spielt eine Rolle, da die anliegende Temperatur zeitversetzt den Kern des Lebensmittels erreicht.

Des Weiteren sind es die Anwendungen, die einer Varianz von 0 bis 8 % beim Überlappungsfaktor führen können. Auch dies wird im Anschluss wieder anhand von Beispielen erläutert:
- Bis zu 5 - 7 % Überlappungsfaktor
   À-la-Carte-Garen: In typischen À-la-Carte-Situationen, werden Lebensmittel à la minute gegart, so dass diese in 10-20 Minuten serviert werden können. Dies kann je nach Bestellmenge sehr stressig in einer Küche werden. Hier ist es wichtig, dass einzelne Komponenten gleichzeitig entnommen und unnötige Geräteinteraktionen, wie Türöffnungen, vermieden werden können. Ein Koch wird in diesen Phasen nicht vorm Gerät stehen und auf ein "Fertig-Werden" warten. Im Gegenteil; es werden Phasen entstehen, wo das Gerät für Sekunden zum Auffordern einer Entladung klingelt, und es erst verzögert zum Entladen kommt. Hier ist es sinnvoll, direkt auch weitere Lebensmittel zu entladen, wenn diese sich im Toleranzband befinden. Ein Untergaren ist dabei nicht zu erwarten
- Bis zu 5 - 8 % Überlappungsfaktor
   Regenerieren/Finishing: Beim Regenerieren oder Finishen von Lebensmitteln, insbesondere vorgegarten Speisen, kann der Überlappungsfaktor ebenfalls großzügiger ausgelegt werden. Kleine Lebensmittel, bei denen die innere Gare bereits erreicht ist, können einen höheren Überlappungsfaktor aufweisen. Dies gilt auch für große Lebensmittel wie Gratins, Aufläufe oder Braten, die ebenfalls ein größeres Toleranzband vertragen, da die letzten Temperaturunterschiede keinen signifikanten Einfluss auf die Lebensmittelqualität haben. Da diese Lebensmittel bereits vorgegart sind, ist ein genaues Timing nicht so entscheidend wie bei frischen Lebensmitteln.

Ein Gargerät, wie der iCombi Pro der Anmelderin, kann mit einer Geräteintelligenz zur Implementierung eines erfindungsgemäßen Verfahrens genutzt werden. Diese Geräteintelligenz bestimmt und/oder gewichtet innerhalb der Garung, anhand der durch eine Nutzerauswahl entstehenden Stellgrößen, wie z.B. Garraumklima durch Garprozessauswahl, Lebensmitteleinstellung durch lebensmittelabhängige Garprozessauswahl und Garfunktion durch Nutzen typischer Finishing- oder À-la-Carte-Anwendungen, den optimalen Überlappungsfaktor und wendet diesen situationsbezogen an.

Durch Nutzung weitere Auswertungen eines aktuellen Garverlaufs, wie z.B. eines Anstiegs(verhaltens) einer Lebensmittelkerntemperaturen oder eines Soll- und Ist Vergleichs der Garraumtemperatur, kann der Überlappungsfaktor (weiter) angepasst werden. Wird z.B. erkannt, dass die Garraumtemperatur unterhalb einer Zieltemperatur liegt, kann der Überlappungsfaktor reduziert werden, um ein Untergaren zu verhindern.

Im Anschluss wird die Erfindung anhand von virtuellen Bons, deren Länge eine Gardauer eines Garprogramms repräsentiert, beschrieben.

Die Figuren 2a, 2b und 2b zeigen jeweils ein und das selbe Bon 10 in einem Anzeigebereich 1 mit einer Längserstreckung entlang einer Zeitachse, so dass ein Startzeitpunkt und ein Endzeitpunkt des dem Bon 10 zugeordneten Garprogramms visualisiert ist. In Figur 2a ist dabei das Bon 10a mit seiner optimaler Gardauer, die zu einer optimalen Garqualität führt, zu sehen. In Figur 2b umfasst das Bon 10b einen ersten markierten Bereich, der einen diesem Bon 10b über seinen zugeordneten Überlappungsfaktor bestimmten Gardauerverkürzungsbereich 11 visualisiert; und in Figur 2c umfasst das Bon 10c zusätzlich zu dem Gardauerverkürzungsbereich 11 einen zweiten markierten Bereich, der einen diesem Bon 10 über seinen zugeordneten Überlappungsfaktor bestimmten Gardauerverlängerungsbereich 12 visualisiert.

Die Bons 10 können im Anzeigebereich 1 einer Anzeigeeinrichtung des Gargeräts als Bons 10a, 10b, 10c jeweils in der Länge ihrer optimalem Gardauer angezeigt, während die Toleranzbänder, die durch den Gardauerverkürzungsbereich 11 und/oder den Gardauerverlängerungsbereich 12 bestimmt sind, zwar im Bon und somit im Gargerät hinterlegt sind, aber nicht oder nur auf Anfrage angezeigt werden.

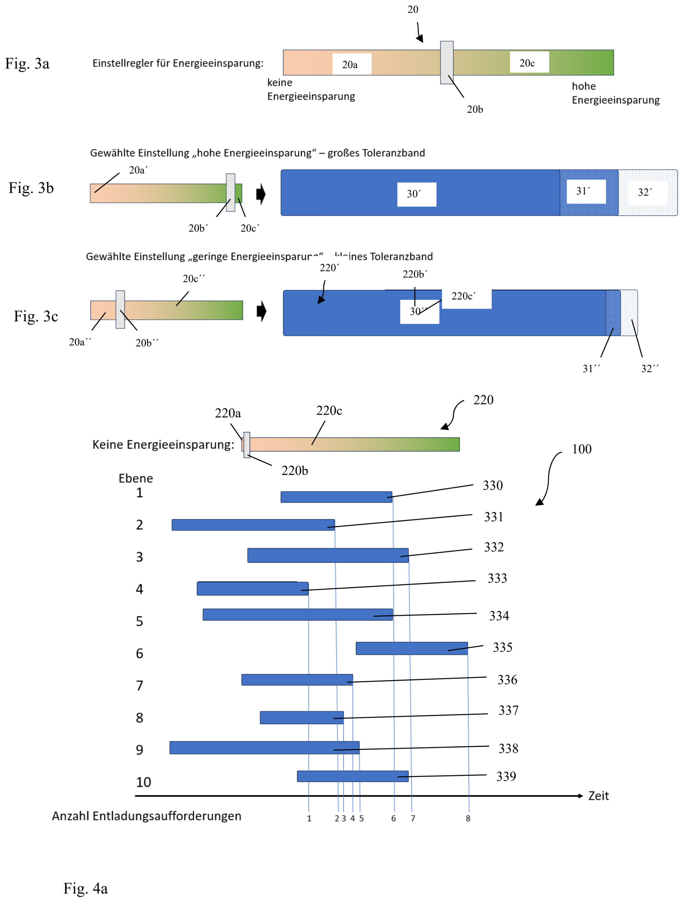

Figur 3a zeigt einen virtuellen Einstellregler 20 zum Einstellen einer Energieeinsparung, wie er auf einem Anzeigebereich anzeigbar ist, so dass ein Nutzer des Gargeräts einstellen kann, wo in einem Bereich 20a mit geringer Energieeinsparung und einem Bereich 20c mit großer Energieeinsparung ein Schieber 20b durch Berühren und Verschieben in den einen oder anderen Bereich 20a bzw. 20c zu platzieren ist. Figur 3b zeigt den Einstellregler 20' nach Verschieben des Schieber 20b' nach rechts, so dass der Schieber 20b' im Bereich 20c' mit großer Energieeinsparung liegt, was sich unmittelbar auf einen daneben dargestellten Bon 30' auswirkt, der dadurch große Toleranzbänder für sowohl seinen Gardauerverkürzungsbereich 31' als auch seinen Gardauerverlängerungsbereich 32' erhält. Wird hingegen der Schieber 20b'', wie in Figur 3c gezeigt, nach links verschoben, also in den Bereich 20a" geringer Energieeinsparung, so verkleinern sich die Toleranzbänder des Bons 30", da sowohl der Gardauerverkürzungsbereich 31'' als auch der Gardauerverlängerungsbereich 32" zu verkürzen ist.

Die Figuren 4a bis 4c zeigen jeweils einen Anzeigebereich 100, 100', 100" eines Gargeräts, das zehn Einschubeben mit jeweils einer Garzone besitzt, die längs der y-Achse aufgetragen sind, während längs der x-Achse die Zeit aufgetragen ist. Zu sehen ist jeweils auch ein Einstellregler 220, 220' zum Einstellen einer Energieeinsparung und zehn Bons 330-339, 330'-339', wobei jeweils ein Bon einer Einschubebene zugeordnet ist, um einen Á-la-Carte-Betrieb zu visualisieren, bei dem über die dargestellte Zeitspanne zehn unterschiedliche Lebensmittel in den Garraum des Gargeräts zum Garen geladen und entladen werden.

Figur 4a zeigt eine Konstellation, bei der keine Energieeinsparung über den Einstellregler 220 gewählt ist, also der Schieber 220b ganz links angeordnet ist, am Ende des Bereichs 220a mit geringer Energieeinsparung. Ferner sind die zehn Bons 330 bis 339 zeitlich so angeordnet, dass ein Entladen samt Garraumtür-Öffnung achtmal notwendig ist, da keine Toleranzbänder vorhanden sind. Danach muss als erstes Lebensmittel das zum Bon 333 in Einschubebne 4, als zweites Lebensmittel das zum Bon 331 in der Einschubeben 2, als drittes Lebensmittel das zum Bon 337 in der Einschubebene 8, als viertes Lebensmittel das zum Bon 336 in der Einschubebene 7, als fünftes Lebensmittel das zum Bon 338 in der Einschubebene 9, als sechste Lebensmittel die zu den Bons 330, 334 in der Einschubebenen 1 bzw. 5, als siebte Lebensmittel die zu den Bons 332, 339 in der Einschubebenen 3 bzw. 10 und als achtes Lebensmittel das zum Bon 335 in der Einschubebene 6 entladen werden. Also werden nur zu den Zeitpunkten 6 und 7 zwei Lebensmittel entladen, da ihre jeweiligen Gardauern im Wesentlichen gleichzeitig ablaufen, während bei allen anderen Lebensmitteln eine Einzelentladung stattfindet, wobei die Entladezeitpunkte 2, 3, 4 und 5 nur geringe zeitliche Abstände aufweisen. An jedem der acht Entladezeitpunkten 1 bis 8 wird eine Entladungsaufforderung z.B. in Form eines Klingeltons vom Gargerät ausgegeben.

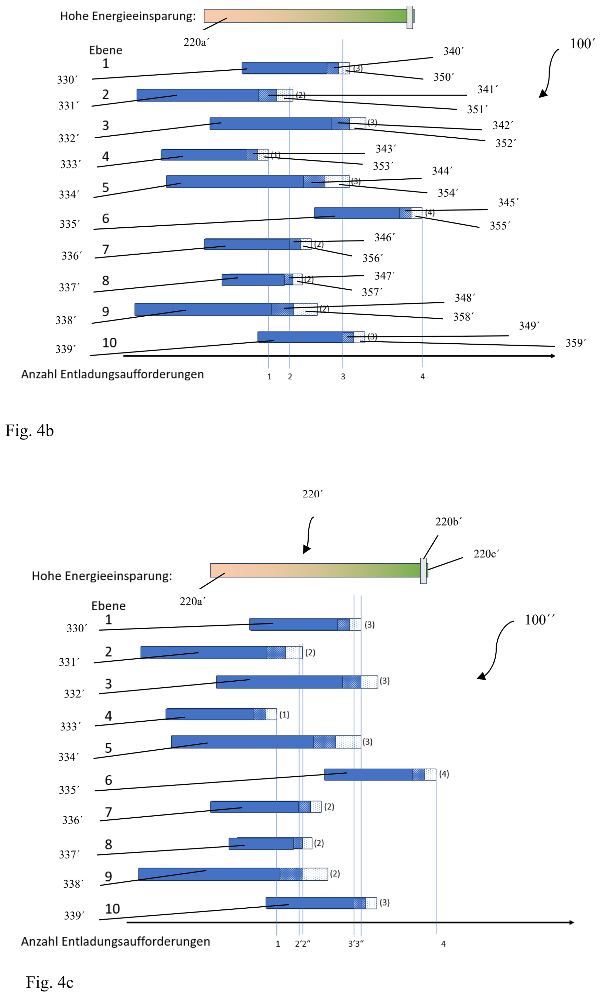

Figur 4b unterscheidet sich von Figur 4a dadurch, dass eine maximale Energieeinsparung über den Einstellregler 220' gewählt ist, also der Schieber 220b' ganz rechts angeordnet ist, am Ende des Bereichs 220b' mit hoher Energieeinsparung. Die zehn Bons 330' bis 339' sind in Figur 4b zeitlich so angeordnet wie bei Figur 4a, aber es sind auch die jeweiligen Toleranzbänder der Bons 330' bis 339' über die entsprechenden Gardauerverkürzungsbereiche 340'-349' sowie Gardauerverlängerungsbereiche 350'-359' aufgrund der eingestellten hohen Energieeinsparung dargestellt. Dadurch reduzieren sich die Entladezeitpunkte von acht in Figur 4a auf vier in Figur 4b, die sich bei einer Überlappung der Toleranzbänder von Bons längs der Zeitachse bspw. über einen möglichst geringen Abstand der Entladezeitpunkte zu den Mittelwerten der jeweiligen idealen Gardauern bestimmt.

Bei der Konstellation nach Figur 4b findet zu den vier Entladezeitpunkten folgende Entladung statt:
- Entladezeitpunkt 1:
   Für Ebene 4 ist keine kombinierbare Ebene verfügbar, da keine Toleranzbandüberschneidung vorliegt.
- Entladezeitpunkt 2:
   Früheste Möglichkeit zum Entladen durch Ebene 7 bedingt, könnte noch bis Ende Ebene 2 verschoben werden, und umfasst die Ebenen 2, 8 und 9 zusätzlich zur Ebene 7.
- Entladezeitpunkt 3:
   Durch Ebene 10 bedingt, wobei eine Verschiebung des exakten Zeitpunktes durch Mittelwertbildung der Toleranzabstände zu den Ebenen 1, 3, 5 und 10 möglich ist.
- Entladezeitpunkt 4:
   Für Ebene 6 existiert keine kombinierbare Ebene, so dass nur dort eine Entladung vorgesehen ist.

Figur 4c unterscheidet sich von Figur 4b nur dadurch, dass bei den Entladezeitpunkten 3 und 4, zu denen jeweils eine Entladung in mehreren Ebenen stattfinden kann, jeweils der früheste Entladezeitpunkt mit einem ' und der jeweils späteste Entladezeitpunkt mit einem " gekennzeichnet ist. Die Berechnung der Entladezeitpunkte in Figur 4b hat über Mittelwertbildung stattgefunden.

Denkbar sind alle Einstellmöglichkeiten zwischen der von Figur 4a ohne Energieeinsparung und der der Figuren 4b und 4c mit maximaler Energieeinsparung, so dass sich die acht Entladezeitpunkte der Figur 4a nach und nach auf die vier Entladezeitpunkte reduzieren können. So kann z.B. eine mittlere Energieeinsparung mit sechs Entladezeitpunkten einhergehen, was bereits zu einer Arbeitserleichterung ohne Einbußen bei der Garqualität zusätzlich zur Energieeinsparung führt.

Die in der voranstehenden Beschreibung, den Zeichnungen sowie den Ansprüchen offenbarten Merkmale der Erfindung können sowohl einzeln als auch in jeder beliebigen Kombination für die Verwirklichung der Erfindung in ihren Ausführungsformen wesentlich sein.

### Bezugszeichenliste

- 1: Anzeigenbereich
- 10, 10a, 10b, 10c: Bon
- 11: Gardauerverkürzungsbereich
- 12: Gardauerverlängerungsbereich
- 20: Einstellregler
- 20a, 20a', 20a'': Bereich mit geringer Energieeinsparung
- 20b, 20b', 20b": Schieber
- 20c, 20c', 20c": Bereich mit großer Energieeinsparung
- 30', 30": Bon
- 31', 31": Gardauerverkürzungsbereich
- 32', 32": Gardauerverlängerungsbereich
- 100, 100', 100": Anzeigenbereich
- 220, 220': Einstellregler
- 220a, 220a': Bereich mit geringer Energieeinsparung
- 220b, 220b': Schieber
- 220c, 320c': Bereich mit großer Energieeinsparung
- 330-339, 330'-339': Bon
- 340'-349': Gardauerverkürzungsbereich
- 350'-359': Gardauerverlängerungsbereich

## Patentansprüche

1. Repräsentant eines in einem Garraum eines Gargerät mit einem Garprogramm zu garenden Lebensmittels, in Form eines virtuellen Bons (10, 10a, 10b, 10c, 30', 30'', 330-339, 330'-339'), das konfiguriert ist, um in einem Anzeigebereich (1, 100, 100', 100'') einer Anzeigeeinrichtung, insbesondere des Gargeräts, relativ zu einer Zeitachse zum Visualisieren einer Gardauer anzeigbar zu sein, wobei sich das Bon (10, 10a, 10b, 10c, 30', 30", 330-339, 330'-339') von einem Startzeitpunkt, zu dem das repräsentierte Lebensmittel in den Garraum zu beladen ist, bis zu einem Endzeitpunkt, zu dem das repräsentierte Lebensmittel aus dem Garraum zum Erreichen einer eingestellten Gare zu entladen ist, in seiner Länge erstreckt, so dass sich aus der Differenz von Endzeitpunkt zu Startzeitpunkt die Gardauer ergibt,
**dadurch gekennzeichnet, dass**
zu dem Endzeitpunkt ein Toleranzband in Abhängigkeit von zumindest einem Überlappungsfaktor bestimmt ist, wobei
der Überlappungsfaktor ein prozentualer Betrag der Gardauer ist, der einen Gardauerverkürzungsbereich (11, 31', 31'', 340'-349'), der von der Gardauer abziehbar ist, und/oder einen Gardauerverlängerungsbereich (12, 32', 32'', 350'-359'), der auf die Gardauer aufschlagbar ist, definiert, und das Toleranzband den Gardauerverkürzungsbereich und/oder den Gardauerverlängerungsbereich umfasst.

2. Repräsentant nach Anspruch 1, **dadurch gekennzeichnet, dass**
der Überlappungsfaktor von
• zumindest einer ersten Größe zum Klima im Garraum, wie bestimmt durch die Temperatur, die Feuchte, die Strömungsgeschwindigkeit und/oder den Druck im Garraum,
• zumindest einer zweiten Größe zur Art des Lebensmittels, wie Geflügel, Fleisch, Fisch, Eierspeisen und Desserts, Gemüse und Beilagen oder Backwaren,
• zumindest einer dritten Größe zum Garbetrieb, wie mit Heißluft, Dampf und/oder Mikrowellen,
• zumindest einer vierten Größe zur Empfindlichkeit, zum Kaliber, zur Menge und/oder zum Zustand, insbesondere vorgegart, gefroren oder frisch, des Lebensmittels,
• zumindest einer fünften Größe zum Gargrad, wie bestimmt durch Kerntemperatur, Bräunung und/oder eine Krustierung,
• zumindest einer sechsten Größe zum Gargerät, wie bestimmt durch eine Garraumdimensionierung, ein Zubehör, insbesondere in Form eines Gargutträgers, eine Klimazone im Bereich des Lebensmittels im Garraum und/oder einen Ressourcenverbrauch, insbesondere bestimmt durch einen Energieverbrauch, und/oder
• zumindest einer siebten Größe zum Garverfahren, wie in Form eines À-la-Carte-Garens, eines Regenerierens oder Finishings,
abhängt.

3. Repräsentant nach Anspruch 2, **dadurch gekennzeichnet, dass**
für die erste, zweite, dritte, vierte, fünfte, sechste und/oder siebte Größe ein Defaultwert des Überlappungsfaktors vorgegeben ist, wobei der Defaultwert veränderbar ist.

4. Repräsentant nach einem der vorangehenden Ansprüche, **dadurch gekennzeichnet, dass** der Überlappungsfaktor bis zu 8% der Gardauer beträgt, wobei insbesondere ein Mittelwert von 5% vorgebbar und/oder veränderbar ist.

5. Repräsentant nach einem der vorangehenden Ansprüche, **dadurch gekennzeichnet, dass** innerhalb des Toleranzbands keine wahrnehmbaren sensorische und hygienische Garergebnisbeeinträchtigungen des aus dem Garraum entladenen Lebensmittels wahrnehmbar sind.

6. Verfahren zum Anzeigen eines Entladens eines mit einer Tür verschließbaren Garraums eines Gargeräts, wobei im Garraum zumindest zwei Lebensmittel zumindest zeitweise gleichzeitig gegart werden und jedem Lebensmittel ein Repräsentant in Form eines virtuellen Bons (10, 10a, 10b, 10c, 30', 30'', 330-339, 330'-339') nach einem der vorangehenden Ansprüche zugeordnet wird, das auf einem Anzeigebereich (1, 100, 100', 100'') einer Anzeigeeinrichtung entlang einer Zeitachse in x-Richtung angezeigt wird.

7. Verfahren nach Anspruch 6, **dadurch gekennzeichnet, dass**
im Garraum n Einschubebenen und/oder m Garzonen bereitgestellt sind, und
im Anzeigebereich (1, 100, 100', 100'') die n Einschubebenen längs der y-Richtung und/oder die m Garzonen längs der z-Richtung angezeigt werden, wobei n und/oder m zu den natürlichen Zahlen von 2 und mehr gehören.

8. Verfahren nach Anspruch 6 oder 7, **dadurch gekennzeichnet, dass**
für jedes Bon (10, 10a, 10b, 10c, 30', 30'', 330-339, 330'-339') eine Entladungsinformation und/oder eine Entladungsaufforderung zu einem Entladezeitpunkt angezeigt und/oder ausgegeben wird, und/oder
für jedes Bon (10, 10a, 10b, 10c, 30', 30'', 330-339, 330'-339') der Gardauerverkürzungsbereich (11, 31', 31", 340'-349') und/oder
der Gardauerverlängerungsbereich (12, 32', 32", 350'-359') angezeigt wird, zumindest auf Anfrage.

9. Verfahren nach einem der Ansprüche 6 bis 8, **dadurch gekennzeichnet, dass**
bei Überlagerung der Toleranzbänder von zumindest zwei Bons (10, 10a, 10b, 10c, 30', 30", 330-339, 330'-339') entlang der x-Achse ein gemeinsamer Entladezeitpunkt bestimmt wird, insbesondere durch einfache Mittelwertbildung, in Abhängigkeit der ersten, zweiten, dritten, vierten, fünften, sechsten und/oder siebten Größe gewichtete Mittelwertbildung, Auswahl des frühest möglichen Entladungszeitpunkts für besagte zumindest zwei Bons (10, 10a, 10b, 10c, 30', 30'', 330-339, 330'-339') oder Auswahl des spätest möglichen Entladungszeitpunkts für besagte zumindest zwei Bons (10, 10a, 10b, 10c, 30', 30", 330-339, 330'-339').

10. Verfahren nach einem der Ansprüche 6 bis 9, **dadurch gekennzeichnet, dass**
eine Energieeinsparung zur Bestimmung des Überlappungsfaktors eingestellt werden kann, insbesondere über einen Einstellregler (20, 220, 220').

11. Verfahren nach einem der Ansprüche 6 bis 10, **dadurch gekennzeichnet, dass**
eine Empfindlichkeit zur Bestimmung des Überlappungsfaktors eingestellt werden kann, insbesondere durch Auswahl einer von mehreren Empfindlichkeitsstufen.

12. Gargerät mit einem durch eine Tür verschließbaren Garraum, der n Einschubebenen und/oder m Garzonen umfasst, wobei n und/oder m zu den natürlichen Zahlen von 2 und mehr gehören, und mit einer Anzeigeeinrichtung, die einen Anzeigebereich (1, 100, 100', 100") umfasst, in dem auf einem virtuellen Bonbrett mit einer Zeitachse in x-Richtung und einer Einschubebenenachse in y-Richtung und/oder einer Garzonenachse in z-Richtung Repräsentanten von im Garraum mit einem Garprogramm zu garenden Lebensmittels in Form von virtuellen Bons (10, 10a, 10b, 10c, 30', 30'', 330-339, 330'-339') nach einem der Ansprüche 1 bis 5 ablegbar sind.

13. Gargerät nach Anspruch 12, **dadurch gekennzeichnet, dass**
Entladezeitpunkte zu den Lebensmitteln in einem Verfahren nach einem der Ansprüche 6 bis 10 bestimmbar sind.
